Europäisches Patentamt

European Patent Office

Office européen des brevets

(19)

(11) Veröffentlichungsnummer: **0 491 266 A2**

# (12) EUROPÄISCHE PATENTANMELDUNG

(21) Anmeldenummer: **91121143.1**

(22) Anmeldetag: **10.12.91**

(51) Int. Cl.5: **C08J 3/20**, G02B 1/04, C08L 101/00

(30) Priorität: **15.12.90 DE 4040203**

(43) Veröffentlichungstag der Anmeldung:
**24.06.92 Patentblatt 92/26**

(84) Benannte Vertragsstaaten:
**AT BE CH DE DK ES FR GB IT LI NL SE**

(71) Anmelder: **RÖHM GMBH**
**Kirschenallee**
**W-6100 Darmstadt(DE)**

(72) Erfinder: **Siol, Werner, Dr.**
**Goerdelerweg 17**
**W-6100 Darmstadt-Eberstadt(DE)**
Erfinder: **Felger, Erwin**
**Haardtring 369**
**W-6100 Darmstadt(DE)**
Erfinder: **Terbrack, Ulrich**
**Berliner Strasse 3**
**W-6107 Reinheim(DE)**
Erfinder: **Wopker, Wilhelm**
**Raiffeisenstrasse 5**
**W-6101 Bickenbach(DE)**

(54) **Eingetrübte Kunststoffelemente.**

(57) Die Erfindung betrifft ein Verfahren zur Herstellung von lichtstreuenden Kunststoffelementen als geformte Körper bestehend aus einem zweiphasigen System aus einem transparenten oder translucenten Matrixpolymer und darin verteilten Polymerpartikeln mit unterschiedlichem Brechungsindex, wobei man die lichtstreuenden Kunststoffelemente aus einer Polymermischung PM bestehend aus einem Matrixpolymerisat P-I und einem davon verschiedenen die Partikel bildenden Polymeren P-II herstellt, mit der Maßgabe, daß P-I und P-II ein System mit Lower Critical Solution Temperature (LCST) bilden.

EP 0 491 266 A2

## Gebiet der Erfindung

Die Erfindung betrifft eingetrübte Kunststoffelemente, die eine hohe Lichtdurchlässigkeit bei gleichzeitig hoher Lichstreuung aufweisen. Derartige Kunststoffelemente werden beispielsweise in der Lichttechnik etwa bei der Darstellung optischer Information z.B. in Form von Projektionsschirmen oder als Leuchtenabdeckungen eingesetzt.

## Stand der Technik

Die Ausnutzung des Streueffekts von üblicherweise transparenten oder transluzenten Partikeln geeigneter Abmessung, die einen vom Matrixmaterial verschiedenen Brechungsindex aufweisen, läßt sich seit langem in der Technik nachweisen.
Dabei bieten sich insbesondere die unter dem Begriff "organische Gläser" zusammengefaßten, transparenten bzw. transluzenten organischen Polymeren an (vgl. D. Stern, Kunststoff-Journal 10/76, pg. 42;Haward, The Physics of Glassy Polymers, Barking Appl. Sci. Publ. 1973.)
Zu diesen "Organischen Gläsern" sind primär das Polymethylmethacrylat (PMMA) und davon abgeleitete Copolymere ("Acrylglas"), Polycarbonat und daneben Polystyrol, Methylpenten-Polymerisat, Polysulfone, Polyvinyltoluole und andere Vinylharze, Cellulose-Derivate, Fluorpolymere, Polyurethane und Silikone zu rechnen. Diese sind überwiegend thermoplastisch verarbeitbar und zum Teil extrudierbar.
Üblicherweise werden zur Eintrübung - neben anorganischen Partikeln (wie z.B. Glaskugeln) - geeignete, auf das Matrixmaterial ("die Trägerphase") abgestimmte Polymerpartikel als "dispergierte Phase" in das Matrixmaterial eingebracht.
Beispielsweise ist aus der DE-OS 21 46 628 ein Polymerisationsverfahren zur Herstellung von feinteiligen Polymerpartikeln bekannt, wobei man in einem Monomerensystem (A), welches zur durch freie Radikale bewirkten Additionspolymerisation imstande ist und

87 bis 99,99 Gew.-%
eines monoäthylenisch ungesättigten Monomeren und
0,01 bis 3 Gew.-%
mindestens eines mehrfach ungesättigten Monomeren enthält,
5 bis 90 Gew.-%
bezogen auf die gesamte Mischung eines anderen löslichen thermoplastischen Additionspolymeren vollständig löst, und wobei das erstere Polymere in dem thermoplastischen Polymeren unlöslich ist; und

die Lösung aus beiden Bedingungen unterwirft, bei denen das Monomersystem mittels freier Radikale unter Bildung von im wesentlichen sphärisch geformten vernetzten Polymerpartikeln polymerisiert ist, wobei die Teilchen eine durchschnittliche Teilchengröße im Bereich von 0,5 bis 30 $\mu$ aufweisen und in einer kontinuierlichen Phase des thermoplastischen Polymeren dispergiert sind.

Die Polymerpartikel gemäß der DE-OS sind vernetzt und daher kaum schmelz- und wenig verformbar, so daß sie z.B. mit Pulvern verpreßt oder im Spritzgießverfahren unterworfen werden können.

In Form von Lösungen kann das Polymerisat z .B. auf Acrylharzplatten aufgesprüht werden. Erwähnt wird die Verwendbarkeit als Mattierungslack sowie als Gemische, die für die Herstellung von Sichtschirmen mit rückwärtiger Projektion geeignet sind und bei Computern, in der Fernseh- oder Filmindustrie, Photographie usw.

Aus der DE-A 21 46 607 bzw. der GB-C 1 370 785 sind ferner durchscheinende bis opake Kunststoffgemische bekannt, die kugelförmige vernetzte Additionspolymerpartikel aus 87 - 99,99 Gew.-% mindestens eines monoethylenisch ungesättigten Monomeren und 0,01 bis 3 Gew.-% eines monomeren Vernetzers dispergiert in einer kontinuierlichen Phase eines Additionspolymerisats, enthalten, wobei das Additionspolymerisat in den vermischten Monomeren löslich sein soll. Vorzugsweise enthält das Kunststoffgemisch noch zusätzliches, mischpolymerisiertes Vernetzungsmittel. Als Anwendungsgebiete werden selbsttragende, durchscheinende Kunststoffplatten, Folienbahnen u.ä. angegeben. Durch Aufsprühen einer Lösung des polymeren Materials aus Acrylfolien erhält man mattierte Folien. Außerdem sollen sich die Gemische für Bildschirme mit rückwärtiger Projektion eignen.

In der US-A 4 464 513 wird ein mattiertes thermoplastisches Harz beansprucht, das auf 100 Gew.-Teile PVC ein vernetztes Polymer in solchen Anteilen enthält, die dem PVC den erwünschten Mattierungseffekt verleihen. Der durchschnittl. Partikeldurchmesser liegt bei 35 - 500 $\mu$. Das Polymer wird gewonnen durch Suspensionspolymerisation einer Mischung aus nichtvernetzenden Monomeren mit 50 - 70 Gew.-Teilen Anteil an Vinylaromaten, 10 - 40 Gew.-Teilen Alkylacrylat mit C1-C13 im Alkylrest und 10 - 40 Gew.-Teilen eines Alkylmethacrylats mit C1-C4 im Alkylrest, 0 - 40 Gew.-Teilen eines weiteren, monoethylenisch ungesättigten Monomeren, wobei 0,5 - 5 Gew.-Teile (auf 100 Gew.-Teile der nicht-vernetzenden Monomeren) eines Vernetzers mit mindestens zwei Doppelbindungen vorhanden sein sollen. Hergestellt werden sie durch Einbettung gepulverter Glasfasern in modifiziertem Acrylharz und anschließender einachsiger Reckung, gefolgt von einer Schlußbeschichtung mit einer Ruß-haltigen Acrylatschicht. Lichtstreuende Acrylharzscheiben als Projektionsschirme sind Gegenstand der JP-OS 82 05742 (Chem. Abstr. 96, 200768a), wobei die gewünschte Lichtstreuung durch eingebettete Quarzkügelchen mit 0,5 - 20 $\mu$ Durchmesser in PMMA erreicht wird. Laut GB-PS 1 585 338 erhält man lichtstreuende Platten mit besserer optischer Auflösung, größerem optischen Halbwertswinkel und größerer Flexibilität als gewöhnliche glasfaserhaltige Platten, wenn man Kunststoffplatten verwendet, die mit Glaskugeln gefüllt sind. Die Glaskugeln haben Durchmesser von 0,001 bis 0,05 mm. Als Trägermaterialien werden Thermoplasten wie Celluloseester, Polycarbonat, Polyarylsulfon, Polystyrol oder Acrylharze genannt.

Aus der DE-A 35 28 165 bzw. der US-A 4 876 311 sind eingetrübte Kunststoffelemente bekannt, die als Trübungsmittel in einer Polymermatrix eingebettete vernetzte Polymer-Perlen enthalten. Die vernetzten Perlen bestehen aus einem Polymerisat, das

zu 9,9 bis 59,9 Gew.-%

aus einem oder mehreren radikalisch polymerisierbaren Monomeren, die einen aromatischen Rest enthalten oder nichtaromatischen Monomeren, die Halogen enthalten und

zu 90 bis 40 Gew.-%

aus diesen Monomeren copolymerisierbaren, aber von diesen verschiedenen, vinylischen Monomeren und

zu 0,1 bis 20 Gew-%

mindestens eines vernetzenden Monomeren und

zu 0 bis 10 Gew.-%

eines (stark) polaren Monomeren

aufgebaut ist, mit der Maßgabe, daß

a) der Brechungsindex des Polymerisats höher ist als der der Polymermatrix und daß

b) die mittlere Perlgröße der Perlen bei 20 - 50 $\mu$m liegt.

Ferner wurden mit dem Ziel der Datenspeicherung in der US-A 4 722 595 lokale Entmischungen von zunächst verträglichen Polymerblends empfohlen, wie auch ganz allgemein die Verträglichkeit von Polymeren durch Erwärmen über den Trübungspunkt charakterisiert werden kann (vgl. G.P. Hellmann et al. Makromol. Chem. Macromol. Symp. 38, 17 - 30 (1990)).

Aufgabe und Lösung

Die Lösungen des Standes der Technik gehen von dem unmittelbar einsichtigen Konzept aus, der Lichtstreueffekt werde durch ein permanent zweiphasiges System gebildet aus dem transparenten bzw. transluzenten Matrixmaterial und den darin dispergierten Partikeln aus einem Material mit abweichendem Brechungsindex erzeugt. Dabei schienen sich die generelle Unverträglichkeit der verwendeten Polymerspecies und die Existenz der für den Lichtstreueffekt verantwortlichen Phasengrenzen gegenseitig zu bedingen. Andererseits bedeuten solche mehrphasigen Systeme regelmäßig einen Kompromiß in Bezug auf die Gesamteigenschaften des Systems in Bezug auf optische, mechanische und thermische Eigenschaften. Daher mußte sich die Praxis mit den zwangsläufig auftretenden Limitierungen im Eigenschaftsprofil solcher eingetrübten lichtstreuenden Kunststoffelemente abfinden.

Es wurde nun gefunden, daß sich lichtstreuende Kunststoffelemente KE mit einem vorteilhaften Eigenschaftsprofil auf einfachste Weise dadurch erzeugen lassen, daß zwei **partiell verträgliche** unter sich verschiedene Polymerspecies P-I und P-II (mit verschiedenen Brechungsindices) nämlich solche, die als Polymermischung PM eine **Lower Critical Solution Temperature** (LCST) aufweisen, wobei P-I für das jeweilige Matrixpolymerisat steht, auf eine Temperatur oberhalb der LCST erwärmt werden. Bei den besonders bevorzugten Polymermischungen PM' werden beim Erwärmen in den Bereich der oberen Mischungslücke Entmischungsstrukturen erhalten, die in ihrem Lichtstreuverhalten den Systemen des Standes der Technik mindestens gleichwertig oder sogar überlegen sind.

Die Polymermischungen PM

Das vorstehend aufgezeigte Prinzip (bei Berücksichtigung des "Standes der Technik" s. oben) läßt zunächst die partiell verträglichen Polymermischungen mit LCST als geeignet erscheinen, wobei deren thermoplastische Verarbeitbarkeit ein wichtiges Auswahlkriterium darstellt. Ferner gilt die Voraussetzung, daß sich die beiden Polymeren, das Matrixpolymerisat P-I und das Polymere P-II, aus denen die Polymermischung PM aufgebaut ist hinsichtlich ihrer Brechungsindices hinreichend unterscheiden ($\Delta n > 0,01$). Ferner sollte wenigstens eine der beiden Polymerspecies, P-I oder P-II ein Molekulargewicht $M_w > 40\ 000$ Dalton aufweisen (Bestimmung der Molekulargewichte durch Lichtstreuung. Vgl. H.f. Mark et al. Encyclopedia of Polmyer Science & Engineering 2nd Ed. Vo. 10, pg. 1 - 19; J. Wiley 1987).

Weiter besitzt vorteilhaft wenigstens eines der beiden Polymeren P-I und P-II eine Glastemperatur $T_g > 50$ Grad C (zur Glastemperatur $T_g$ vgl. Vieweg-Esser, Kunststoff-Handbuch Bd. IX, S. 333 - 340, Urban & Schwarzenberg 1963; H. Mark et al. loc.cit, Vol. 7, pg. 531 - 544, J. Wiley 1987).

Als besonders geeignet im Sinne der vorliegenden Erfindung haben sich Polymermischungen PM erwiesen, die den folgenden Randbedingungen a) und b) genügen.

a) Polymermischungen PM, in denen wenigstens eines der beiden Polymeren P-I oder P-II ein Copolymer darstellt, das nicht molekular einheitlich aufgebaut ist, wie beispielsweise ein durch radikalische Polymerisation hergestelltes, statistisches Copolymeres.

b) Polymermischungen PM, in denen wenigstens 0,01 Gew.-% des einen Polymeren (P-I oder P-II) **kovalent** an das andere Polymere gebunden ist.

Bei den Polymermischungen PM, die den Randbedingungen gemäß a) und/oder b) genügen, ist in der Regel gewährleistet, daß die Polymeren beim Erwärmen über die LCST bzw. unter Extrusionsbedingungen bei T > LCST stets zu den geforderten, lichtstreuenden Strukturen entmischen. Werden die genannten, die Entmischung begrenzenden Randbedingungen nicht erfüllt, so sind die erforderlichen Streustrukturen nur in einem sehr engen, schwer reproduzierbaren Temperaturbereich zu realisieren, da der Entmischungsvorgang mit der Zeit weiter fortschreitet (Reifung). Solche Mischungen sind aber nur sehr bedingt für eine technische Anwendung geeignet.

Besonders hervorzuheben ist, daß auch sehr dünne, lichtstreuende Schichten aus den Polymeren P-I und P-II durch Coextrusion erzeugt werden können. Die Schichtdicke kann dabei im Bereich 10 bis 300 $\mu$m liegen, vorteilhaft bei ca. 20 $\mu$m. Dabei werden beispielsweise auch keine Ziehriefen beobachtet, wie sie beim Stand der Technik u.a. beim Einarbeiten von vernetzten Partikeln als Streukörper häufig auftreten.

Bei der Verwendung als Projektionsschirme bringen gerade diese dünnen Schichten eine hohe Abbildungsschärfe mit sich.

Durch die grundlegende Voraussetzung der erfindungsgemäß einzusetzenden Polymermischungen PM, daß es sich um Systeme mit LCST-Eigenschaften handelt, wird die Auswahl aus den "Organischen Gläsern" (siehe "Stand der Technik") eingegrenzt.

In der Regel werden dabei die Polymeren P-I und P-II zwei verschiedenen Polymerklassen angehören.

Systeme mit LCST-Verhalten sind u.a. in US-A 4 772 506 und US-A 4 772 595, beschrieben. Zum LCST-Verhalten vgl. H.F. Mark et al., Encyclopedia of Polymer Science & Technology, Vol. 15, pg. 295 - 402 J. Wiley & Sons 1989; G. Allen & J.C. Bevington, Comprehensive Polymer Science, Vol. 2, pg. 139 - 141, Pergamon Press 1989.

Phänomenologisch erkennt man LCST-Verhalten daran, daß eine transparente Polymermischung beim Erwärmen auf eine spezifische Temperatur (Cloud Point) und darüber trübe erscheint, im Einklang mit der Vorstellung, daß unterhalb dieser Temperatur eine stabile, homogene, d.h. einphasige Mischung vorliegt, bei bzw. oberhalb dieser Temperatur jedoch eine Phasentrennung stattgefunden hat.

Voraussetzung für die makroskopisch erkennbare Trübung ist das Auftreten genügend großer Domänen (als Anhalt sei ein Bereich von 0,5 $\mu$m - 50 $\mu$m genannt) - im vorliegenden Falle des Polymeren P-II - um die für die Trübung verantwortlichen Brechungsindex-Differenzen wirksam werden zu lassen.

Bevorzugt sind die folgenden Polymermischungen PM aufgebaut aus:

PM-I : P-I-1 = Polystyrol; P-II-1 = Copolymerisat aus Methylmethacrylat und Cyclohexylmethacrylat,

PM-II : P-I-1 = Polystyrol; P-II-2 = Copolymerisat aus Methylmethacrylat und n-Butylmethacrylat

PM-III : P-I-2 = Polycarbonat P-II-3 = Copolymerisat aus Methylmethacrylat und Phenylmethacrylat

Dabei sind prinzipiell Matrix-Polymerisat P-I und Partikel-bildenses Polymerisat P-II wechselseitig austauschbar. Welches Polymere die Matrix bildet und welches die Partikel, hängt im wesentlichen vom Phasenverhältnis und von dem Molekulargewicht der Polymeren P-I und P-II ab.

Herstellung der eingetrübten Kunststoffelemente

Die Herstellung einer bei Entmischung lichtstreuenden Polymerschicht aus PM kann in einfachster Weise derart erfolgen, daß eine partiell verträgliche Kunststoffmischung PM aus einem geeigneten Lösungsmittel als Film auf einen transparenten Träger aufgebracht wird. Die Lösungsmittel müssen dabei den verwendeten Systemen PM angepaßt sein. Beispielsweise sind für die Styrol-haltigen Systeme PM-I bzw. PM-II Toluol, Xylol oder Tetrahydrofuran geeignet.

Als derartige transparente Träger sind u.a. Mineralglas oder "Organische Gläser" der eingangs beschriebenen Art, beispielsweise Polycarbonat, Polystyrol, Polysulfone, Cellulose-Derivate, Polyurethan oder Silikone u.ä. geeignet.

Die lichtstreuenden Strukturen entstehen beim anschließenden Erwärmen der zunächst glasklaren, verträglichen Polymerschicht auf T > LCST. Daneben ist es auch möglich, die Kunststoffmischung bei T > LCST zu extrudieren. In diesem Falle wird das lichtstreuende Kunststoffelement direkt als Folie oder im Falle der Coextrusion als lichtstreuende Schicht auf einem (extrudierbaren) transparenten Kunststoff (siehe "Organische Gläser", oben) erhalten.

Darüber hinaus eröffnet sich auch die Möglichkeit die partiell verträglichen Polymermischungen durch Spritzgießen zu verarbeiten.

Die folgenden Beispiele dienen zur Erläuterung der Erfindung:

Im folgenden wird die Viskosität J in Anlehnung an DIN 1342, DIN 51 562 und DIN 7745 angegeben.

BEISPIELE

Beispiel 1

Polystyrol (P-I-1; J = 61 ml g$^{-1}$) und das Copolymerisat aus Methylmethacrylat und n-Butylmethacrylat (J = 36 ml g$^{-1}$; 50 : 50 Gew.-Teile = P-II-2) werden zu 20 Gew.-% in Toluol gelöst und im Gewichtsverhältnis 1 : 1 vermischt. Aus dieser Lösung wird ein 30 $\mu$m dicker Film auf einer Glasplatte erzeugt.

Nach ca. 3-minütigem Erwärmen auf 175 Grad C (LCST = 140 Grad C) erhält man einen eingetrübten Film (Transmission ca. 90 %, Energiehalbwertswinkel $\gamma_{1/2}$ = 21,3 Grad).

Die lichtstreuende Wirkung des Films bleibt erhalten, wenn dieser Film auf eine Kunststoffoberfläche (z.B. PLEXIGLAS $^R$ Folie S30) übertragen wird.

Beispiel 2

Man wählt die in Beispiel 1 verwendeten Polymeren in einem anderen Mischungsverhältnis: Styrol P-I-1 zum Copolymerisat aus Methylmethacrylat und n-Butylmethacrylat P-II-2 im Gew.-Verhältnis 30 : 70 und erwärmt 1 min auf 200 Grad C.

Man erhält ein lichtstreuendes Kunststoffelement mit einem Energiehalbwertswinkel $\gamma_{1/2}$ = 19,2 Grad.

Beispiel 3

Erzeugung der lichtstreuenden Kunststoffelemente durch Coextrusion.

10 kg eines Copolymerisats aus Methylmethacrylat und n-Butylmethacrylat P-II-2 (Gew.-Verhältnis 50 : 50; J = 25 ml/g) und 10 kg Polystyrol P-II-1 (Polystyrol 158 H der BASF) werden gemeinsam granuliert und anschließend in unterschiedlichen Schichtstärken auf Acrylglas (PLEXIGLAS ® ZK 30 bzw. PLEX ® 8713F der Fa. Röhm) coextrudiert.

Die Dicke der Coextrusionsschicht beträgt je nach Maschineneinstellung 20 - 100 $\mu$m. Die Haftung der Coextrusionsschicht auf dem Substrat ist gut (Tesa-Test mit Gitterschnitt: kein Abriß). Die Platten zeigen hohe Lichtstreuung bei guter Transmission.

Bei einer Substratdicke von 3 mm findet man in Abhängigkeit von der Dicke der Coextrusionsschicht (Blend P-II-2/P-II-1) folgende Meßwerte.

Dicke der Coextrusionsschicht: 60 $\mu$m:

$\gamma_{1/2}$ = 21 Grad, Transmission T = 85 % (bei 500 nm), 88 % (bei 700 nm)

Dicke der Coextrusionsschicht: 100 $\mu$m:

$\gamma_{1/2}$ = 22 Grad, Transmission T = 73 % (bei 500 nm), 79 % (bei 700 nm).

**Patentansprüche**

1. Verfahren zur Herstellung von lichtstreuenden Kunststoffelementen als geformte Körper bestehend aus einem zweiphasigen System aus einem transparenten oder transluzenten Matrixpolymer und darin verteilten Polymerpartikeln mit unterschiedlichem Brechungsindex,

   dadurch gekennzeichnet,

   daß man die lichtstreuenden Kunststoffelemente aus einer Polymermischung PM bestehend aus einem Matrixpolymerisat P-I und einem davon verschiedenen die Partikel bildenden Polymeren P-II herstellt, mit der Maßgabe, daß P-I und P-II ein System mit Lower Critical Solution Temperature (LCST) bilden.

2. Verfahren gemäß Anspruch 1, dadurch gekennzeichnet, daß wenigstens eines der Polymerisate P-I oder P-II ein Molekulargewicht Mw > 40 000 aufweist.

3. Verfahren gemäß den Ansprüchen 1 und 2, dadurch gekennzeichnet, daß wenigstens eines der beiden Polymerisate P-I oder P-II eine Glastemperatur Tg > 50 Grad C besitzt.

4. Verfahren gemäß den Ansprüchen 1 bis 3, dadurch gekennzeichnet, daß wenigstens eines der beiden Polymerisate P-I oder P-II ein Copolymerisat darstellt.

5. Verfahren gemäß den Ansprüchen 1 bis 4, dadurch gekennzeichnet, daß wenigstens 0,01 Gew.-% des einen der beiden Polymerisate kovalent an das andere gebunden ist.

6. Verfahren gemäß den Ansprüchen 1- 5, dadurch gekennzeichnet, daß das Matrixpolymerisat P-I ausgewählt ist aus der Gruppe der an sich bekannten organischen Gläser.

7. Verfahren gemäß Anspruch 6, dadurch gekennzeichnet, daß das Matrixpolymerisat ein thermoplastischer Kunststoff ist.

8. Verfahren gemäß den Ansprüchen 1 - 7 zur Herstellung lichtstreuender Kunststoffelemente in Form von dünnen Schichten.

9. Verfahren gemäß Anspruch 8, dadurch gekennzeichnet, daß die Polymermischungen PM durch Koextrusion auf einen transparenten Kunststoff erzeugt werden.

10. Verfahren gemäß den Ansprüchen 1 - 9, dadurch gekennzeichnet, daß das Matrixpolymerisat P-I Polystyrol ist.

11. Verfahren gemäß den Ansprüchen 1- 9, dadurch gekennzeichnet, daß das Matrixpolymerisat P-I Polycarbonat ist.

12. Verfahren gemäß den Ansprüchen 1- 11, dadurch gekennzeichnet, daß das Polymerisat P-II ein Copolymerisat von (Meth)-acrylsäureestern von C1-C18-Alkoholen darstellt.